# EUROPÄISCHE PATENTANMELDUNG

(11) **EP 0 600 412 A1**
(43) Veröffentlichungstag der Anmeldung: **08.06.1994**
(21) Anmeldenummer: 93119209.0
(22) Anmeldetag: 29.11.1993
(51) Int. Cl.: B60T 11/16

(54) **Hauptzylinder mit Plungerkolben und tiefgezogenem Stufengehäuse**

(30) Priorität: 02.12.1992 DE 4240515
(71) Anmelder: ITT Automotive Europe GmbH, D-60488 Frankfurt am Main (DE)
(72) Erfinder: Schonlau, Jürgen, D-65396 Walluf (DE); von Hayn, Holger, D-61118 Bad Vilbel (DE); Harth, Ralf, D-61440 Oberursel (DE); Kreuter, Kristian, D-65719 Hofheim (DE); Ritter, Wolfgang, D-61140 Oberursel (DE)
(74) Vertreter: Portwich, Peter

(57) **Zusammenfassung**

Die Erfindung betrifft einen Hauptzylinder, der als Twin-Hauptzylinder in geregelten Bremssystemen (ABS/ASR) eingesetzt werden kann. Es soll daher ein Hauptzylinder beschrieben werden, der bei insbesondere in der Breite geringen Abmessungen unter hohem Druck zuverlässig arbeitet und besonders einfach aufgebaut ist.

Erfindungsgemäß ist ein Kolben (15) vorgesehen, an dem in relativ großem Abstand Führungsflächen zweier abgedichteter Führungshülsen (8, 9) angreifen, während in dem Raum (12) zwischen den Führungshülsen (8, 9) in Verbindung mit dem Nachlaufbehälter stehendes Druckmittel an der Oberfläche des Kolbens (15) anliegt. Hierdurch lassen sich erhebliche Seitenkräfte abfangen und die Gleitfähigkeit der Dichtungen verbessern. Vorteilhafte Weiterbildungen beschäftigen sich mit der Anwendung eines gestuften, tiefgezogenen Gehäuses (1), der Kraftreduzierung durch querschnittsvermindernde Dichtungen (13) und der Fixierung des Schaltpunktes.

## Beschreibung

Die Erfindung betrifft einen Hauptzylinder mit einfachem Aufbau, der möglichst auch für Bremsanlagen mit Schlupfregelung (ABS/ASR) einsetzbar sein soll, d. h. auch unter hohem Druck zuverlässig arbeitet.

Einfach aufgebaute Hauptzylinder sind beispielsweise aus der DE-OS 38 16 607, der DE-OS 33 31 834, US-PS 46 85 301, der WO 89/09 712, der WO 87/03 344, der DE-OS 34 31 115 oder der DE-OS 38 16 608 bekannt.

Nachteilig bei den bekannten, einfach aufgebauten Zylindern ist es, daß diese regelmäßig nur zur Betätigung von Kupplungen geeignet sind, also nur bei vergleichsweise niedrigem Druck zuverlässig arbeiten.

Die vorliegende Erfindung geht daher aus von einem Hauptzylinder der sich aus dem Oberbegriff des Anspruchs 1 ergebenden Gattung. Aufgabe der Erfindung ist es, einen derartigen Zylinder unter Verwendung nur weniger preiswerter Einzelteile besonders stabil und unter hohem Druck zuverlässig arbeitend auszugestalten.

Die Aufgabe wird durch die sich aus dem kennzeichnenden Teil des Anspruchs 1 ergebende Merkmalskombination gelöst. Die Erfindung besteht im Prinzip also darin, bei dem erfindungsgemäßen Kolben für in Axialrichtung möglichst weit auseinanderliegende Führungsflächen zu sorgen, um auf den Kolben wirkende radiale Flächen möglichst leicht abfangen zu können. Durch die Erfindung wird weiterhin erreicht, daß der Kolben über weite Strecken von Druckmittel umgeben ist, so daß die Dichtungen nicht trockenlaufen können und so langfristig ein besonders gutes Dichtverhalten des Hauptzylinders gewährleistet wird.

Um die in dem Hauptzylinder auftretenden Druckkräfte besonders gut auffangen zu können, empfiehlt sich in Weiterbildung der Erfindung die Anwendung der Merkmalskombination nach Anspruch 2. Danach ist jede der beiden Führungshülsen in beiden axialen Richtungen weitgehend direkt abgestützt, so daß die auftretenden Kräfte vom Gehäuse unmittelbar aufgenommen werden.

Um das Laufverhalten des Kolbens zu verbessern und um die Kolbenoberfläche über eine möglichst große Strecke durch Umspülen mit Druckmittel feuchtzuhalten, empfiehlt sich in Weiterbildung der Erfindung die Merkmalskombination nach Anspruch 3. Damit sind die beiden Dichtungen hinsichtlich der Führungshülsen soweit wie möglich beabstandet.

Um die Anlagefläche der druckseitigen Führungshülse zu verbessern empfiehlt sich die Merkmalskombination nach Anspruch 4. Bei einer derartigen Ausgestaltung kann gemäß den Merkmalen nach Anspruch 5 der Stützring gleichzeitig auch noch als Anschlag gegen das Herausziehen des Kolbens aus dem Zylinder angewendet werden.

In der Regel wird es zweckmäßig sein, den Kolben aufgrund der hohen zu übertragenden Kräfte aus Metall auszuführen. Um die für einen Plungerkolben notwendige Oberflächengüte zu erreichen, muß die Oberfläche nachbearbeitet werden. Hierzu empfiehlt sich insbesondere die Merkmalskombination nach Anspruch 6. Dabei kann nämlich auf die Bearbeitung der Kolbenenden verzichtet werden, da diese durch die Bewegungsbegrenzung des Anschlages nicht mit der Dichtung in Berührung kommen. Hierdurch ergeben sich Vorteile bei der Herstellung des Kolbens, da sich beispielsweise das Einspannen des Kolbens zur Bearbeitung vereinfacht.

Um die auf die Führungshülse wirkenden hydraulischen Kräfte möglichst gering zu halten und um dem Hauptzylinder eine möglichst schlanke Bauform geben zu können, empfiehlt sich in Weiterbildung der Erfindung die Merkmalskombination nach Anspruch 7 und 8. Danach wird die Grenzfläche zwischen Führungshülse und Gehäuse gegenüber dem Kolben durch einen O-Ring abgedichtet, der axial versetzt gegenüber der üblichen Manschettendichtung sitzt, und deshalb einen kleineren Wirkdurchmesser ermöglicht.

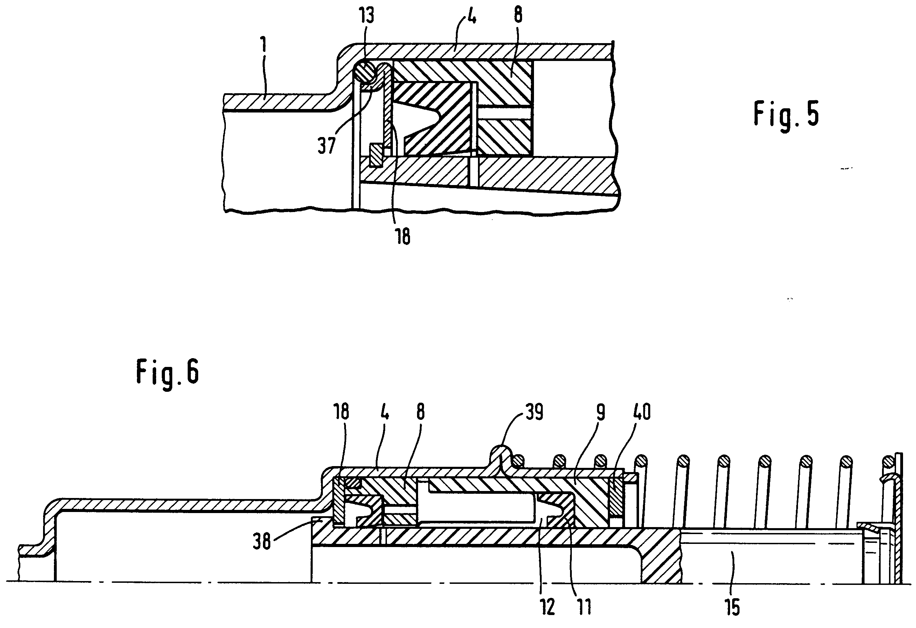

Um die von der Druckkammer auf die Dichtung und die Führungshülse ausgeübten Kräfte möglichst gering zu halten ist es wesentlich, daß diese auf eine möglichst kleine Querschnittsfläche des Zylinders einwirken. Eine hierfür geeignete Maßnahme ergibt sich aus den Merkmalen nach Anspruch 8. Soweit man gemäß Anspruch 4 oder 5 einen Stützring verwendet, muß dafür gesorgt werden, daß die Dichtung in Richtung zur Druckkammer hin vor dem Stützring liegt (siehe Figur 5). Hierzu empfiehlt sich in Weiterbildung der Erfindung eine Merkmalskombination nach Anspruch 9. Der Haltering kann gleichzeitig auch noch die Funktion des oben genannten Stützrings mit übernehmen, indem er als Anschlag für den Kolben dient. Eine weitere Möglichkeit besteht in der zusätzlichen Anwendung der Merkmale nach Anspruch 12 für den Haltering.

Um aufgrund des Drucks in der Druckkammer in radialer Richtung wirkende Kräfte weitgehend zu vermeiden, wird die Anwendung der Merkmale nach Anspruch 10 empfohlen. Danach greift der in axialer Richtung wirkende Druck hinsichtlich des Kolbens an einer relativ weit zur Betätigungsstange des Kolbens hin verlegten Stelle an. Hierdurch wird der Hebel in Bezug auf die Führungsflächen der Führungshülsen sehr kurz, so daß Drehmomente weitgehend verhindert sind.

Um eine eng definierte Schaltlage des Kolbens zu haben und insbesondere auch in Verbindung mit den Merkmalen nach Anspruch 4 und 5 empfiehlt sich die Nutzung der Merkmale gemäß Anspruch 11. Durch die als Ausgleichsbohrung im Kolben dienende Bohrung durch die hülsenförmige Kolbenwand wird in Verbindung mit der festgelegten Lage der Dichtung der geometrische Schaltpunkt des Kolbens recht präzise festgelegt. Eine derartige Maßnahme ist insbesondere in Verbindung mit Merkmalen nach Anspruch 13 für die Definition eines eng tolerierten Schaltpunkts recht wirksam.

Eine weitere Reduzierung der Hebelkräfte in Folge der an der Kolbenstange angreifenden Betätigungsstange läßt sich durch die Nutzung der Merkmale nach Anspruch 12 erreichen.

Wie weiter oben schon angedeutet, dienen die Merkmale nach Anspruch 13 der verbesserten Festlegung des Schaltpunkts des erfindungsgemäßen Hauptzylinders.

Die Sicherung der Führungshülsen, insbesondere gemäß Anspruch 2, läßt sich besonders einfach durch Maßnahmen nach Anspruch 14 erreichen. Hierbei empfiehlt sich insbesondere die Merkmalskombination nach Anspruch 15, wodurch im Bedarfsfalle auch lösbare Schnappverbindungen zum Festhalten der Führungshülsen gegen das Gehäuse erzielt werden können.

Eine andere vorteilhafte Modifikation des erfindungsgemäßen Zylinders ist durch die Merkmale nach Anspruch 16 gegeben. Dabei werden die beiden Führungshülsen einstückig miteinander vereint, wodurch die Maßnahmen zur Sicherung der Bewegung der beiden Hülsen gegeneinander vereinfacht werden. Allerdings ist dabei zu prüfen, ob das hierzu benötigte Kunststoffgußteil eine für einen preiswürdigen Zylinder noch hinreichend unkomplizierte Form erhalten kann.

Um mit preiswerten Mitteln ein festes, für die Anwendung als Twin-Hauptzylinder besonders geeignetes Gehäuse zu erhalten, empfiehlt sich die Verwendung der Merkmale nach Anspruch 17. Die Verwendung tiefgezogener Gehäuse für Hauptzylinder ist im Prinzip an sich aus der US-PS 46 79 680 oder DE-OS 37 06 246 bekannt. Nicht aber die Kombination eines derartigen Zylinders mit den hier angegebenen, vorzugsweise aus Kunststoff hergestellten Führungshülsen. Hierdurch werden die Wirkungen der beiden Materialien in vorteilhafter Weise miteinander vereint.

Die Ausgestaltung des Gehäuses nach Anspruch 17 empfiehlt sich insbesondere in Kombination der Merkmale gemäß Anspruch 18. Hierbei wird durch den Tiefziehvorgang gleichzeitig noch ein Auslaßstutzen zum Anschluß der Bremsleitung bzw. der Bremsschläuche angeformt. Dieser kann mit einem Gewinde zur Aufnahme einer Befestigungsmutter oder mit anderen gegebenenfalls zusätzlichen üblichen Maßnahmen zur Befestigung der Bremsleitung versehen sein.

Eine weitere Möglichkeit zur Nutzung der durch das tiefgezogene Gehäuse möglichen Vorteile besteht in der Anwendung der in Anspruch 19 geschilderten Merkmale. Hierdurch läßt sich bei der Herstellung des Gehäuses gleichzeitig noch ein Flansch zur Befestigung an einem Spritzwandblech oder einem Kraftverstärker erreichen. Eine andere vorteilhafte Weiterbildung der Erfindung kann in den Merkmalen nach Anspruch 20 bestehen. Danach wird die der Druckkammer abgewandte äußere Dichtung durch Vorsprünge am Gehäuse oder der Führungshülse axial in einer von dem Druckraum weg weisenden Richtung gehalten. Dabei kann der Vorsprung bzw. die Vorsprünge an die Führungshülse direkt angegossen sein oder aus dem Gehäuseende herausgeformt sein.

Damit der erfindungsgemäße Zylinder möglichst kurz wird, empfiehlt sich in Weiterbildung die Merkmalskombination nach Anspruch 20. Hierbei wird für einen verhältnismäßig kurzen Weg zu dem den Kolben erfindungsgemäß umgebenden Raum geschaffen. Eine besonders einfache Abdichtung des Nachfüllgehäuses gegenüber dem Zylindergehäuse ergibt sich aus den Merkmalen nach Anspruch 21.

Der umlaufende, ringförmige Gehäuseanschlag kann beispielsweise durch einen zwei Gehäuse miteinander verbindenden Falz hergestellt sein oder aber durch eine das Gehäuse umlaufende Faltung des Gehäusematerials.

Im Rahmen der Erfindung ist es auch nicht zwingend notwendig, daß die zweite, dem Druckraum abgewandte Dichtung durch das Gehäuse festgehalten wird. Diese kann auch entsprechend Anspruch 21 in einer Kolbennut angeordnet sein.

Soweit das Gehäuse aus zwei Gehäusehälften zusammengesetzt wird, kann in den Verbindungsbereich der beiden Gehäuse auch ein Dichtring eingeformt werden, der die beiden Gehäuseteile gegenüber der Dichthülse bzw. den Dichthülsen abdichtet.

Ein Ausführungsbeispiel der Erfindung wird nachfolgend anhand der Zeichnung beschrieben. Darin zeigt:
- Figur 1: eine erste Ausführungsform der Erfindung,
- Figur 2: einen vergrößerten Ausschnitt der Ausführungsform nach Figur 1,
- Figur 3: eine zweite Ausführungsform der Erfindung,
- Figur 4: ausschnittsweise eine gegenüber Figur 2 abgewandelte Ausführungsform,

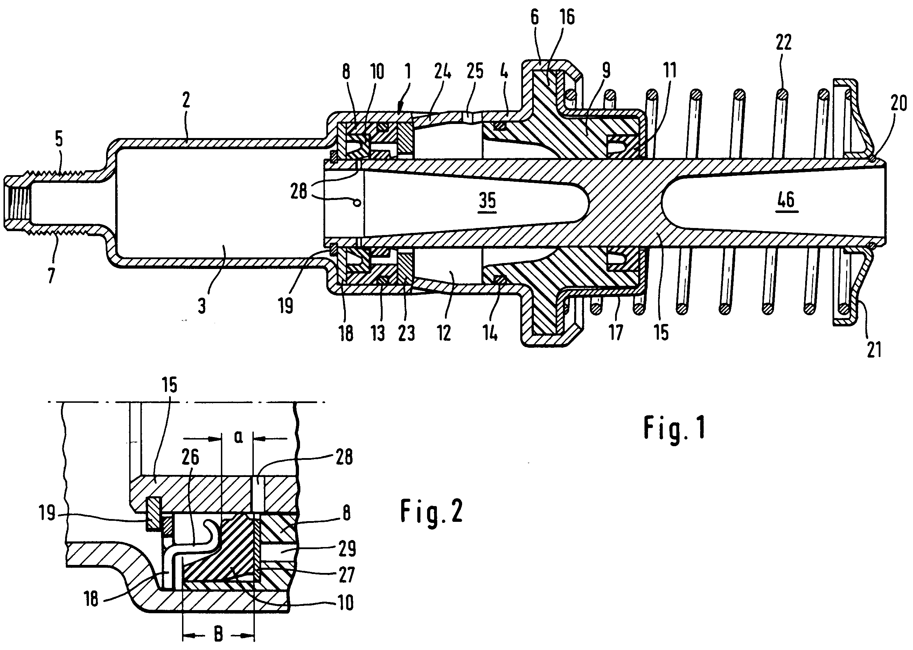

- Figur 2: einen vergrößerten Ausschnitt der Ausführungsform nach Figur 1,
- Figur 5: als vergrößerten Ausschnitt eine Abwandlung der Ausführungsform nach Figur 1,
- Figur 6: eine Abwandlung der Ausführungsform nach Figur 2,

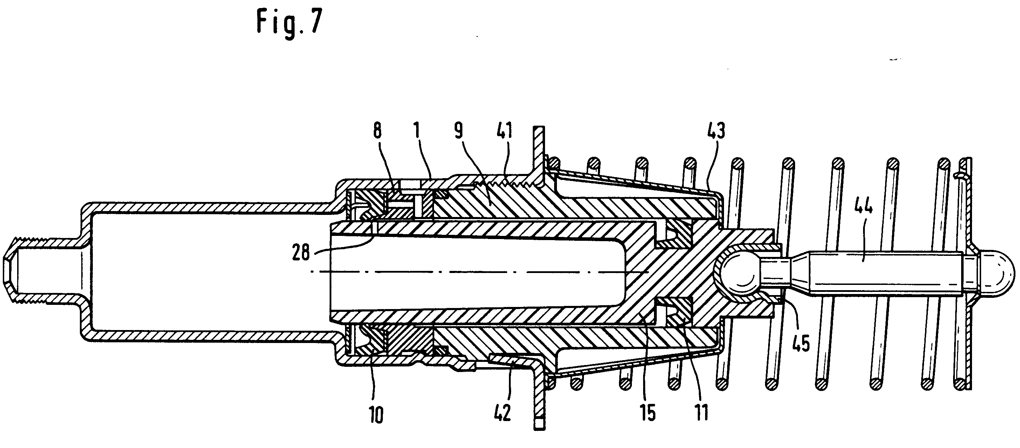

- Figur 7: ein weiteres Ausführungsbeispiel.

In Figur 1 erkennt man ein aus mehreren Stufen bestehendes Gehäuse 1, welches aus tiefgezogenem Blech gefertigt ist. Dabei nimmt eine erste Gehäusestufe 2 den Druckraum 3 des Hauptzylinders auf, während in der zweiten Gehäusestufe 4 Mittel zum Abdichten und Fuhren des Kolbens untergebracht sind. An die beiden Gehäusestufen 2 und 4 schließen sich eine dritte Gehäusestufe 5 und eine vierte Gehäusestufe 6 an. Die dritte Gehäusestufe 5 dient als Anschluß für die dichte Befestigung einer Bremsleitung oder eines Bremsschlauches. Sie ist deshalb vorzugsweise mit einem Anschlußgewinde 7 versehen. Die vierte Gehäusestufe 6 bildet eine Schulter, welche als Widerlager für die Befestigung in einem Verstärker oder einem Spritzblech dienen kann und gleichzeitig eine Abstützung für eine Führungshülse 9 bildet, wie weiter unten noch erläutert wird.

Die zweite Gehäusestufe 4 und die vierte Gehäusestufe 6 nehmen eine erste Führungshülse 8 und eine zweite Führungshülse 9 auf, die vorzugsweise aus Kunststoff gefertigt sind und einen als Plungerkolben ausgebildeten Kolben 15 in dem Gehäuse führen. Die beiden Führungshülsen 8,9 sind im Abstand zueinander angeordnet, um einerseits einen verbesserten Widerstand gegen Kippbewegungen des Kolbens 15 zu bieten. An den beiden äußeren Enden sind die beiden Führungshülsen 8, 9 darüber hinaus noch mit Ausnehmungen versehen, die zur Aufnahme einer ersten Dichtung (O-Ring 13 bzw. 14) und einer zweiten Manschettendichtung 10 bzw. 11 dienen. Die Manschettendichtung 10 hat erkennbar die Aufgabe, den Druckraum 3 gegenüber der äußeren Mantelfläche des Kolbens 15 abzudichten.

Zwischen den beiden Führungshülsen 8, 9 schließen die Gehäusestufen 4, 6 einen den Kolben 15 umgebenden Raum 12 ein. Die Trennfläche zwischen den Außenflächen, der Führungshülsen 8 und 9 und der Innenwand des Gehäuses 1 gegenüber dem Umgebungsraum 12 geschieht durch zwei O-Ringe 13, 14. Um den Durchmesser des Hauptzylinders kleinzuhalten, ist in axialer Richtung der jeweilige O-Ring 13, 14 gegenüber der zugehörigen Manschettendichtung 10 bzw. 11 versetzt. Gegenüber der Trennfläche zwischen Kolben 15 und zweiter Führungshülse 9 dichtet die Manschettendichtung 11 den Raum 12 ab. Die zweite Führungshülse 9 besitzt eine umlaufende Konsole 16, die sich mit ihrer einen Seitenfläche gegen den Boden der vierten Gehäusestufe 6 und mit ihrer anderen Seitenfläche gegen einen Gehäusetopf 17 abstützt, welcher durch geeigneten Formschluß, wie beispielsweise umbörteln, lanzieren oder falzen, mit dem Gehäuse 1 verbunden ist.

Zwischen der ersten Führungshülse 8 und dem Boden der zweiten Gehäusestufe 4 ist ein Stützring 18 eingelegt, dessen Innendurchmesser kleiner als der Durchmesser des Druckraums 3, aber größer als der Durchmesser des Kolbens 15 ist. Dieser Stützring 18 kann zur Aufnahme auf den Kolben ausgeübter axialer Kräfte dienen. Seine Funktion besteht darin, einen in das druckraumseitige Ende des Kolbens 15 eingesetzten Anschlagring 19 zu hintergreifen und so zu verhindern, daß der Kolben 15 aus dem Gehäuse 1 ganz herausgezogen werden kann. Auf diese Weise ist auch sichergestellt, daß das betroffene Ende des Kolbens 15 nicht mit der Manschettendichtung 10 in Berührung kommt. Die Oberfläche am Ende des Kolbens 15 muß daher nicht gesondert bearbeitet werden, was einen zusätzlichen Herstellungsvorteil bedeutet.

Entsprechendes kann für einen Sprengring 20 gelten, der am entgegengesetzten Ende des Kolbens 15 in diesen eingesetzt ist und einen Federteller 21 gegenüber dem Kolben 15 festhält. Auf diesen Federteller wirkt eine Rückholfeder 22 ein, die sich an ihrem anderen Ende am Gehäusetopf 17 abstützt.

Die erste Führungshülse 8 liegt an ihrem druckraumseitigen Ende über den Stützring 18, wie schon erwähnt, am Boden der zweiten Gehäusestufe 4 an. In entgegensetzter Richtung ist sie über einen weiteren Stützring 23 durch Zungen 24 des Gehäuses 1 gehalten. Durch den Stützring 23 wird verhindert, daß die Stirnfläche der Zungen 24 die aus Kunststoff bestehende Führungshülse 8 beschädigen können, vor allem aber wird erreicht, daß die hohen Axialkräfte sicher abgefangen werden.

In den Raum 12 mündet eine Nachlaufbohrung 25, welche das Gehäuse 1 durchdringt. Oberhalb der Nachlauf- bohrung 25 ist in an sich bekannter Weise ein Nachlauf- behälter angebracht. Zur verbesserten Befestigung und Dichtung des Nachlaufbehälters gegenüber dem Gehäuse 1 kann der zur Befestigung des Behälters dienende Bereich des Ge- häuses 1 abgeflacht sein. Durch eine entsprechende Anpassung der Führungshülsen 8,9 ist dies ohne weiteres möglich, da der dafür notwendige Raum zur Verfügung steht.

Der in Verbindung mit dem Nachlaufbehälter stehende, den Kolben 15 umgebende Raum 12 sorgt dafür, daß die Oberfläche des Kolbens 15 zwischen den Manschettendichtungen 10, 11 ständig mit flüssigem Druckmittel umgeben ist. Hierdurch ist der unter den Dichtungen sich bewegende Kolben 15 stets mit einem Schmierfilm versehen, der die Laufeigenschaft des Kolbens 15 verbessert und ein Trockenlaufen verhindert. Vorteilhaft ist dabei, daß die Dichtungen sehr weit auseinanderliegen, so daß die Schmierung der Kolbenoberfläche über einen großen Streckenbereich stattfindet.

Figur 2 zeigt einen Ausschnitt des Ausführungsbeispiels nach Figur 1. Dabei ist zu erkennen, daß der Stützring 18 mit axialen Vorsprüngen 26 versehen ist, welche den Rücken der Manschettendichtung 10 im Eingriff mit der ersten Führungshülse 8 halten. Zum Schutz der ersten Manschettendichtung 10 kann zwischen dem Rücken der Manschettendichtung 10 und der ersten Führungshülse 8 noch eine Füllscheibe 27 vorgesehen sein. Auf diese Weise wird verhindert, daß der Rücken der ersten Manschettendichtung 10 in eine in der Führungshülse 8 ausgebildeten Verbindungskanal 29 gepreßt werden kann. Die Führungshülse 8 hat gleichzeitig noch die Aufgabe, das Nachsaugen aus dem Raum 12 in den Druckraum 3 über die Manschettendichtung 10 zu ermöglichen. Zur Schaffung des Ausgleichsweges ist die Führungshülse 8 mit entsprechenden Kanälen, Nuten oder anderen Ausnehmungen versehen.

Bei der in Figur 2 gezeigten Abwandlung ist noch zu beachten, daß der Schaltpunkt des Hauptzylinders um so genauer bestimmt ist, je schmaler die auf den Kolben 15 einwirkende innere Fläche der Manschettendichtung 10 ist. Es ist daher zweckmäßig, auf die ansonsten übliche Gestalt deren innerer Dichtlippe zu verzichten und nach Anspruch 23 einen im wesentlichen L-förmigen Querschnitt vorzusehen.

Zusätzlich wird durch die Gestalt der inneren Dichtlippe eine Verringerung des radialen Durchmessers des Gehäuses 1 erreicht. Es wird vorgeschlagen, die axiale Länge a der Anlagefläche der Manschettendichtung 10 am Kolben 15 sehr viel kleiner als die axiale Länge B der äußeren Dichtlippe zu machen. Die äußere Dichtlippe hat im übrigen die Funktion, ein Überströmen des Druckmittels beim Rückholen des Kolbens 15 zuzulassen.

Wichtig für eine genaue Festlegung der Umschaltstellung des Kolbens 15 und damit der Lage der Ausgleichsbohrung 28 gegenüber der ersten Manschettendichtung 10 ist die Wirkungsweise der Vorsprünge 26 gegenüber dieser Dichtung, die diese in Bezug auf die erste Führungshülse 8 fixieren. Da somit ein axiales Wandern der Manschettendichtung 10 verhindert wird, liegt auch die Stellung des Kolbens 15 eindeutig fest, bei der der beschriebene Verbindungsweg geöffnet bzw. ge- schlossen wird.

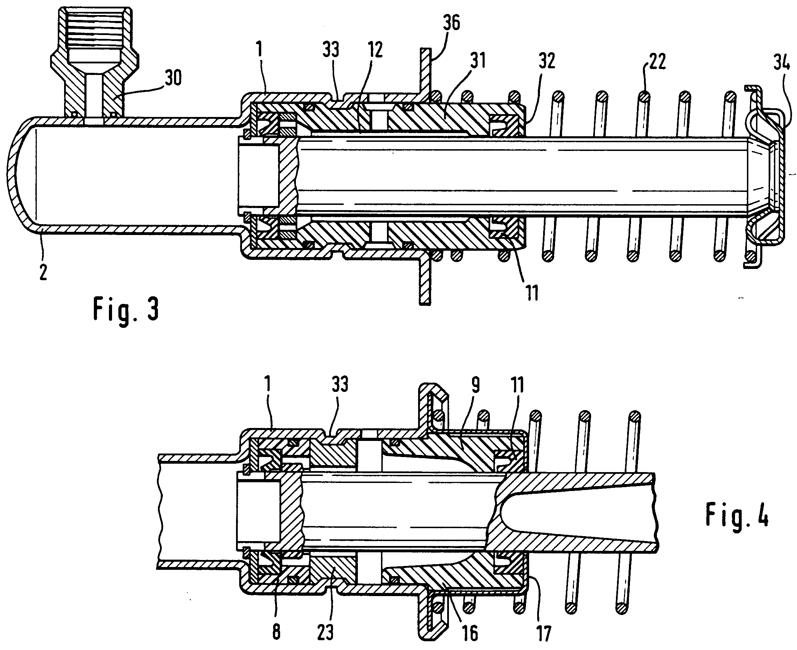

Figur 3 zeigt eine modifizierte Ausführungsform, die nur insoweit erläutert wird, als sie Abweichungen gegenüber dem Ausführungsbeispiel nach Figur 1 und 2 bietet. Man erkennt, daß gegenüber Figur 1 auf die dritte Gehäusestufe 5 und damit die in das Gehäuseblech eingeformte Anschluß verzichtet wurde. Stattdessen wurde ein gesonderter Anschluß 30 auf der ersten Gehäusestufe 2 befestigt. Die beiden Führungshülsen 8 und 9 wurden in Figur 3 zu einem Führungsteil 31 einstückig vereint, in welches der Umgebungsraum 12 des Kolbens eingearbeitet wurde. Weiterhin wurde auf den Gehäusetopf 17 verzichtet und stattdessen das Führungsteil 31 mit einem umlaufenden radialen Vorsprung 32 versehen, der eine Axialbewegung der zweiten Manschettendichtung 11 verhindert.

Eine Arretierung des Führungsteils 31 gegenüber dem Gehäuse 1 geschieht mit Hilfe einer umlaufenden Nut im Führungsteil, in die eine entsprechende umlaufende Einsenkung 33 eingreift. Die umlaufende Einsenkung 33 kann aber auch durch örtliche Eindrückungen ersetzt werden. Der Federteller 21 nach Figur 1 wurde durch einen federnd einrastenden Federteller 34 ersetzt.

Die tiefe Ausnehmung 35 gemäß Figur 1 zur Gewichtsreduzierung des Kolbens 15 und zur günstigen Kraftverlagerung eines Teils der am Kolben 15 angreifenden Kräfte in dessen Inneres zur Verringerung von Seitenkräften wurde weggelassen. Entsprechendes gilt für die zweite Ausnehmung 46 nach Figur 1 zur Aufnahme einer in Figur 1 nicht dargestellten auslenkbaren Schubstange. Durch die einteilige Ausführung des Führungsteils 31 konnte weiterhin auf den Gehäusetopf 17 verzichtet werden, so daß die Feder 22 direkt an einen radialen Ringansatz 36 des Gehäuses 1 angreift.

Der wesentliche Unterschied der Ausführungsform nach Figur 4 gegenüber der Ausführungsform nach Figur 3 besteht darin, daß das Führungsteil 9 wiederum aus einer ersten Führungshülse 8 und einer zweiten Führungshülse 9 besteht, die innerhalb des Gehäuses 1 im Abstand gehalten werden. Dazu dient zum einen hinsichtlich der ersten Führungshülse 8 eine Einsenkung 33, die an einen Stützring 23 angreift. Zum anderen stützt sich die zweite Führungshülse 9 über ihre Konsole 16 an dem Gehäuse 1 ab. Um die Manschettendichtung 11 zu halten ist wiederum ein Gehäusetopf 17 gemäß Figur 1 vorgesehen.

Eine weitere Abwandlung der Ausführungsform nach Figur 1 zeigt Figur 5. Danach ist der Stützring 18 mit einem axialen Ansatz 37 versehen, welcher den O-Ring 13 trägt. Im Gegensatz zu Figur 1 liegt der O-Ring 13 hier direkt an dem Boden der zweiten Gehäusestufe 4 an. Die axiale Länge des axialen Ansatzes 37 ist so gewählt, daß er auf der einen Seite den O-Ring 13 in radialer Richtung sicher zu halten vermag. Andererseits aber auch bei größerer axialer Krafteinwirkung auf den Stützring noch nicht am Boden der zweiten Gehäusestufe 4 anschlägt. Der Vorteil der Anordnung des O-Rings 13 in der Kante des Gehäuses 1 besteht darin, daß hier das Druckmittel sich nicht in radialer Richtung ausbreiten kann und somit die Wirkungsfläche des Druckmittels hinsichtlich der erste Führungshülse 8 auf den Innendurchmesser des O-Rings 13 begrenzt ist. Hierdurch erhält man eine erhebliche Reduzierung der auf die Führungshülse wirkenden Kräfte.

Figur 6 zeigt eine weitere Ausführungsform der Erfindung. Dabei ist am Kolben 15 statt des Anschlagrings 19 ein umlaufender Kragen 38 vorgesehen. Eine derartige Maßnahme empfiehlt sich insbesondere, wenn der Kolben 15 aus Kunststoff gefertigt ist. Statt der Konsole 16 und der vierten Gehäusestufe 6 in Figur 3 weist die Ausführungsform nach Figur 6 einen durch Falten des tiefgezogenen Gehäuses gebildeten umlaufenden Flansch 39 auf. Die Dichtung sitzt im Gegensatz zu Figur 5 hinter dem Stützring 18. Dabei muß dafür gesorgt werden, daß die Grenzfläche zwischen dem Boden der zweiten Gehäusestufe 4 und dem anliegenden Stützring 18 gegenüber dem Druckmittel abgedichtet ist. In diesem Falle treten wieder die gleichen Wirkungen wie schon im Zusammenhang mit Figur 5 beschrieben auf.

Die beiden Führungshülsen 8 und 9 können einstückig miteinander verbunden sein oder unmittelbar aneinander angrenzen, so daß sich wirkungsmäßig ein einziges Führungsteil ergibt. Eine Axialbewegung des Führungsteils in Figur 6 nach rechts wird durch einen Haltering 40 verhindert, der durch Verformung des Gehäuseendes in Formschluß mit dem Gehäuse gebracht wird. Die zweite Manschettendichtung 11 ist in den durch die Führungshülse 9 umschlossenen Raum 12 gelegt, um den Abstand der Führungsflächen zu vergrößern.

Figur 7 zeigt eine weitere Ausführungsform, bei der die erste Führungshülse 8 und die zweite Führungshülse 9 aneinander angrenzen. Die Grenzfläche zwischen zweiter Führungshülse 9 und Gehäuse 1 ist entsprechend Figur 1 durch einen O-Ring abgedichtet. Ein Auswandern der zweiten Führungshülse 9 in der Zeichnung nach rechts gegenüber dem Gehäuse 1 wird durch eine Gewindeverschraubung 41 (siehe obere Hälfte der Zeichnung) oder durch in entgegengesetzter Richtung weisende Haltezungen 42 verhindert, die an einem entsprechenden Ansatz der zweiten Führungshülse 9 angreifen. Der Kolbenanschlag wird durch einen dem Gehäusetopf 17 nach Figur 1 entsprechenden Gehäusetopf 43 erreicht, der durch geeignete Maßnahmen mit dem Gehäuse 1 verbunden ist. Die Kolbenstange 44 ist in den Kolben 15 mittels einer eingegossenen Fassung 45 eingerastet. Ein weiterer Unterschied der Ausführungsform nach Figur 7 gemäß den vorangegangen Ausführungsformen besteht darin, daß die zweite Manschettendichtung 11 in eine Nut des Kolbens 15 gelegt ist. Der Kolben 15 selbst besteht aus Kunststoff, die Fassung 45 wird durch Tiefziehen hergestellt. Das Gehäuse 1 ist wiederum durch den stufenweisen Aufbau für eine Herstellung durch einen Tiefziehvorgang besonders geeignet. Wie auch bei den vorangegangenen Ausführungsbeispielen ist durch die Wirkung der Ausgleichsbohrung 28 die Manbschettendichtung 11 druckausgeglichen. Statt einer oder mehrerer Ausgleichsbohrungen 28 können auch Längsnuten im Kolben 15 vorgesehen sein, so daß hier Ausgleichsschlitze entstehen.

## Patentansprüche

1. Hauptzylinder für ein vorzugsweise steuerbares Bremssystem mit einem mindestens zwei Stufen aufweisenden Gehäuse (1), wobei eine erste Gehäusestufe (2) einen Druckraum (3) aufnimmt und eine zweite Gehäusestufe (4) ein Führungsteil zur Führung eines in die erste Gehäusestufe (2) ragenden Kolbens (15) aufnimmt, dadurch **gekennzeichnet**, daß das Führungsteil durch eine erste Führungshülse (8) und eine zweite Führungshülse (9) gebildet ist, die voneinander vorzugsweise beabstandet den Kolben (15) führen und jeweils eine auf den Kolben (15) einwirkende Manschettendichtung (10, 11) tragen und daß zwischen den beiden Führungshülsen (8, 9) ein den Kolben (15) umgebender Raum (12) vorgesehen ist, der über eine Nachlaufbohrung (25) mit einem Nachlaufbehälter verbunden ist.

2. Hauptzylinder nach Anspruch 1 dadurch **gekennzeichnet**, daß jede der beiden Führungshülsen (8, 9) in beiden axialen Richtungen am Gehäuse (1) abgestützt ist.

3. Hauptzylinder nach Anspruch 1 oder 2 dadurch **gekennzeichnet**, daß die beiden Führungshülsen (8, 9) an ihren voneinander entfernten Enden mit dem Kolben (15) jeweils eine ringförmige Ausnehmung zur Aufnahme der Manschettendichtungen (10, 11) bilden.

4. Hauptzylinder nach einem der vorangegangenen Ansprüche dadurch **gekennzeichnet**, daß die druckraumseitige erste Führungshülse (8) über einen, die Querschnittsfläche des Druckraums (3) überschneidenden Stützring (18) an einem die beiden Gehäusestufen (2, 4) miteinander verbindenden Absatz anliegt.

5. Hauptzylinder nach Anspruch 4 dadurch **gekennzeichnet**, daß der Kolben (15) an seinem dem Druckraum (3) zugewandten Bereich mit einem Anschlagring (19) versehen ist, der in Verbindung mit dem Stützring (18) als Anschlag gegen das Herausziehen oder Herausdrücken des Kolbens (15) dient.

6. Hauptzylinder nach Anspruch 5 dadurch **gekennzeichnet**, daß der Anschlagring (19) durch einen in eine Nut im Kolben (15) eingesetzten Ring gebildet ist.

7. Hauptzylinder nach einem der vorangegangen Ansprüche dadurch **gekennzeichnet**, daß eine Gehäusedichtung insbesondere O-Ring (13,14) den den Kolben (15) umgebenden Raum (12) gegenüber der Innenwand des Gehäuses (1) abdichtet und axial versetzt gegenüber der zugehörigen Manschettendichtung (10, 11) in mindestens einer der Führungshülsen (8, 9) angeordnet ist.

8. Hauptzylinder nach Anspruch 7 dadurch **gekennzeichnet**, daß die Gehäusedichtung (O-Ring 13) der dem Druckraum zugewandten Führungshülse (8) direkt in axialer Richtung an den die beiden Gehäusestufen (2, 4) miteinander verbindenden Absatz anliegt (Figur 5).

9. Hauptzylinder nach Anspruch 8, dadurch **gekennzeichnet**, daß ein Stützring (18) vorgesehen ist, der mit seiner einen Seitenfläche sich an dem dem Druckraum (3) zugewandten Ende der druckraumseitigen Führungshülse (8) und mit seiner anderen Seitenfläche sich an der Gehäusedichtung (O-Ring 13) abstützt, wobei der Stützring (18) vorzugsweise einen umlaufenden axialen Ansatz (37) trägt, der die Gehäusedichtung (O-Ring 13) von innen stützt (Figur 5).

10. Hauptzylinder nach einem der vorangegangenen Ansprüche dadurch **gekennzeichnet**, daß der Kolben (15) eine zum Druckraum (3) hin offene, sich in Kolbenlängsachse erstreckende erste Ausnehmung (35) aufweist, die im zurückgeholten Zustand des Kolbens (15) mindestens in die Ebene reicht, in der die Anlagefläche der zweiten Führungshülse (9) am Kolben (15) angreift.

11. Hauptzylinder nach einem der vorangegangenen Ansprüche dadurch **gekennzeichnet**, daß mindestens eine die Wand des hohlen Kolbens (15) durchdringende Ausgleichsbohrung (28) vorgesehen ist, die im zurückgeholten Zustand des Kolbens (15) den Druckraum (3) über die Nachlaufbohrung (25) mit dem Ausgleichsbehälter verbindet.

12. Hauptzylinder nach einem der vorangegangenen Ansprüche dadurch **gekennzeichnet**, daß eine Ausnehmung (46) zur Aufnahme einer Kolbenstange (44) des Kolbens (15) im zurückgeholten Zustand des Kolbens (15) bis etwa zu der dem Druckraum (3) abgewandten Endfläche der zweiten Führungshülse (9) reicht. (Fig. 1)

13. Hauptzylinder nach einem der vorangegangenen Ansprüche dadurch **gekennzeichnet**, daß ein gegebenenfalls mit axialen Vorsprüngen (26) versehener Stützring (18) die der ersten Führungshülse (8) zugeordnete Manschttendichtung (10) im vorgegebenen Abstand zur ersten Führungshülse (8) hält. (Fig. 2)

14. Hauptzylinder nach einem der vorangegangenen Ansprüche dadurch **gekennzeichnet**, daß die erste und/oder zweite Führunghülse (8, 9) durch eine oder mehrere radial nach innen gerichtete Vorsprünge oder Einsenkungen (24,33) im Gehäuse (1) axial gesichert ist bzw. sind. (Fig. 1,3,4)

15. Hauptzylinder nach Anspruch 14 dadurch **gekennzeichnet**, daß die Einsenkung bzw. Einsenkungen radial nach innen gerichtete Haltezungen (24) oder eine umlaufende Einsenkung (33) sind. (Fig. 1 bzw. Fig. 3)

16. Hauptzylinder nach einem der vorangegangenen Ansprüche dadurch **gekennzeichnet**, daß die beiden Führungshülsen (8, 9) einstückig miteinander verbunden und vorzugsweise aus Kunststoff hergestellt sind. (Fig. 3)

17. Hauptzylinder nach einem der vorangegangenen Ansprüche dadurch **gekennzeichnet**, daß das Gehäuse (1) aus tiefgezogenem Blech und/oder der Kolben (15) vorzugsweise aus Stahl oder beschichtetem Aluminium gebildet ist. (Fig. 1)

18. Hauptzylinder nach einem der vorangegangenen Ansprüche dadurch **gekennzeichnet**, daß an die erste Gehäusestufe (2) eine dritte Gehäusestufe (5) angeformt ist, die einen geringeren Durchmesser als die erste Gehäusestufe (2) aufweist und vorzugsweise mit einem Anschlußgewinde (7) versehen ist und zum Anschluß einer Bremsleitung dient. (Fig. 1, Fig. 7)

19. Hauptzylinder nach einem der vorangegangenen Ansprüche dadurch **gekennzeichnet**, daß an das Gehäuse (1) ein vorzugsweise durch Falten gebildeter ringförmiger Flansch (39) zur axialen Halterung des Gehäuses (1) angeformt ist.

20. Hauptzylinder nach einem der vorangegangenen Ansprüche dadurch **gekennzeichnet**, daß zur axialen Halterung der Manschettendichtung (11) in der zweiten Führungshülse (9) ein diese radial hintergreifender, vorzugsweise ringförmig umlaufender Vorsprung (17, 32, 40) vorgesehen ist, der mit der zweiten Führungshülse (9) oder dem Gehäuse (1) einstückig oder formschlüssig verbunden ist.

21. Hauptzylinder nach einem der vorangegangenen Ansprüche dadurch **gekennzeichnet**, daß die zweite Gehäusestufe (2) einen Nachlaufbehälter trägt, wobei die Aufsatzfläche des Behälters auf dem Gehäuse (1) vorzugsweise abgeplattet ist und der Nachlaufbehälter gegenüber dem Gehäuse (1) über einen auf der Aufsatzfläche liegenden O-Ring abgedichtet ist.

22. Hauptzylinder nach einem der vorangegangenen Ansprüche dadurch **gekennzeichnet**, daß der Kolben (15) aus Kunststoff gebildet ist und die zweite Manschttendichtung (11) in einer Nut des Kolbens (15) sitzt und so den den Kolben umgebenden Raum (12) gegenüber der zweiten Führungshülse (9) abdichtet. (Fig. 7)

23. Hauptzylinder nach einem der vorangegangenen Ansprüche dadurch **gekennzeichnet**, daß die Manschettendichtung (10) einerseits am Außendurchmesser lippenförmig ausgebildet ist, um das Nachsaugen zu ermöglichen, zum anderen an der Innenseite der Kolbenabdichtung, möglichst in einem axial eng begrenzten Abschnitt, den Kolben (15) dichtend umgreift, (a << B), um den Leerweg (Schließung) des Kolbens (15) zu minimieren..
